# EUROPÄISCHE PATENTSCHRIFT

(11) **EP 3 288 805 B1**
(45) Veröffentlichungstag und Bekanntmachung des Hinweises auf die Patenterteilung: **10.04.2019**
(21) Anmeldenummer: 16722072.2
(22) Anmeldetag: 22.04.2016
(51) Int. Cl.: B60T 8/172, B60W 40/06

(54) **SENSORANORDNUNG ZUM ERKENNEN EINES ZUSTANDS EINER FAHRBAHN MIT ZUMINDEST ZWEI BEABSTANDETEN ULTRASCHALLSENSOREN, FAHRERASSISTENZSYSTEM, KRAFTFAHRZEUG SOWIE DAZUGEHÖRIGES VERFAHREN**
SENSOR ARRANGEMENT FOR DETECTING A STATE OF A ROADWAY, COMPRISING AT LEAST TWO ULTRASONIC SENSORS SPACED APART FROM ONE ANOTHER, A DRIVER ASSISTANCE SYSTEM, A MOTOR VEHICLE, AND AN ASSOCIATED METHOD
ENSEMBLE DE DÉTECTION POUR DÉTECTER L'ÉTAT D'UNE CHAUSSÉE, COMPRENANT AU MOINS DEUX DÉTECTEURS À ULTRASONS ESPACÉS ENTRE EUX, SYSTÈME D'ASSISTANCE AU CONDUCTEUR, VÉHICULE À MOTEUR ET PROCÉDÉ ASSOCIÉ

(30) Priorität: 27.04.2015 DE 102015106401
(43) Veröffentlichungstag der Anmeldung: 07.03.2018
(73) Patentinhaber: Valeo Schalter und Sensoren GmbH, 74321 Bietigheim-Bissingen (DE)
(72) Erfinder: BARTHEL, Natalie, 74321 Bietigheim-Bissingen (DE); HAMM, Wolfgang, 74321 Bietigheim-Bissingen (DE); JUNG, Thomas, 74321 Bietigheim-Bissingen (DE); SCHULER, Thomas, 74321 Bietigheim-Bissingen (DE); ROEGER, Marian, 74321 Bietigheim-Bissingen (DE); HAERING, Felix, 74321 Bietigheim-Bissingen (DE)
(74) Vertreter: Withopf, Kristina
(86) Internationale Anmeldenummer: PCT/EP2016/059030
(87) Internationale Veröffentlichungsnummer: WO 2016/173945

(56) Entgegenhaltungen:
- EP-A1- 2 698 299
- DE-A1- 4 213 221
- DE-A1- 19 543 137
- DE-A1- 19 745 684
- DE-A1-102004 016 900
- DE-A1-102005 023 696
- DE-A1-102011 113 908
- DE-A1-102012 221 518
- US-A- 5 521 594

## Beschreibung

Die vorliegende Erfindung betrifft eine Sensoranordnung zum Erkennen eines Zustands einer Fahrbahn, mit einer Sensoreinrichtung, welche dazu ausgelegt ist, während einer Fahrt des Kraftfahrzeugs auf der Fahrbahn ein Auftreffen von Wasser auf eine Radlaufverkleidung des Kraftfahrzeugs zu erfassen, und mit einer Steuereinrichtung zum Erkennen des Zustands der Fahrbahn anhand des mittels der Sensoreinrichtung erfassten Auftreffen des Wassers. Die Erfindung betrifft außerdem ein Fahrerassistenzsystem mit einer solchen Sensoranordnung. Ferner betrifft die vorliegende Erfindung ein Kraftfahrzeug mit einem solchen Fahrerassistenzsystem. Schließlich betrifft die vorliegende Erfindung ein Verfahren zum Erkennen eines Zustands einer Fahrbahn.

Das Interesse richtet sich vorliegend insbesondere auf Sensoranordnungen, welche dazu ausgelegt sind, einen Zustand einer Fahrbahn zu erkennen. Eine solche Sensoranordnung kann beispielsweise eine Sensoreinrichtung umfassen, mit welcher erkannt werden kann, ob die Fahrbahn trocken ist oder ob sich auf der Fahrbahn Wasser, Eis oder Schnee befindet. Anhand des Zustands der Fahrbahn kann der Reibungskoeffizient zwischen der Fahrbahn und den Reifen des Kraftfahrzeugs bestimmt werden. Diese Information kann von einem Fahrerassistenzsystem des Kraftfahrzeugs genutzt werden. Beispielsweise kann die Geschwindigkeit des Kraftfahrzeugs in Abhängigkeit von dem erkannten Zustand der Fahrbahn bzw. dem Reibungskoeffizienten angepasst werden. Ein solches Fahrerassistenzsystem kann auch eine Antriebsschlupfregelung oder ein elektronisches Stabilitätsprogramm sein, dem die Informationen bezüglich des Zustands der Fahrbahn zugeführt werden.

In diesem Zusammenhang beschreibt die DE 37 28 708 A1 ein Verfahren zur Erkennung des Reibbeiwerts zwischen einer Fahrbahn und dem Reifen eines Kraftfahrzeugs. Hierbei werden die Abrollgeräusche wenigstens eines Reifens mit einem Mikrofon aufgenommen und das aufgenommene Signal wird in der Frequenz analysiert. Aus dem Frequenzspektrum kann dann auf den Fahrbahnzustand geschlossen werden.

Darüber hinaus beschreibt die DE 100 09 911 C1 ein System zur Überwachung des Luftdrucks eines Kraftfahrzeugsreifens mittels eines Sensors, der in einem Luftvolumen einer Luftfeder angeordnet ist. In dem Luftvolumen entstehen aufgrund der Radschwingungen Schallschwingungen, die von dem Sensor aufgenommen werden. Der Sensor kann als Mikrofon oder als Drucksensor ausgebildet sein. Dabei werden die Radschwingungen als Körperschall über das Fahrwerk auf die Luftfeder übertragen. Hierbei kann der Sensor als Mikrofon oder als Drucksensor ausgebildet sein.

Weiterhin ist aus der DE 10 2008 014 513 A1 eine Vorrichtung zur Erfassung eines Abrollgeräusches eines Fahrzeugreifens bekannt. Die Vorrichtung umfasst einen Sensor, welcher zur Erfassung des Abrollgeräusches dient und welcher in einem Gehäuse angeordnet ist, welches schwingungsisoliert am Fahrzeug befestigt ist. Der Sensor ist bevorzugt als Mikrofon ausgebildet. Alternativ kann als der Sensor auch ein anderer geeigneter Messaufnehmer, beispielsweise ein Drucksensor oder ein Ultraschallsensor, eingesetzt werden.

Um das Erkennen des Auftretens einer Aquaplaninggefahr frühzeitig zu erkennen, schlägt die DE 10 2010 008 258 A1 ein Verfahren vor, bei dem streckenabschnittsbezogene Informationen hinsichtlich der Gefahr von Aquaplaning dem Kraftfahrzeug bereitgestellt werden. Zudem ist wenigstens eine Sensoreinrichtung zur Bestimmung einer nassen Fahrbahn vorgesehen. Bei Vorliegen eines Streckenabschnittes der Fahrstrecke mit Aquaplaninggefahr und der Detektion einer nassen Fahrbahn wird eine Assistenzfunktion zur Prävention von Aquaplaning durchgeführt.

Zudem ist aus der DE 10 2012 221 518 A1 ein Verfahren zur Ermittlung einer Straßenglätte bekannt. Hierbei wird sensorisch die von einem Rad des Fahrzeugs aufgeschleuderte Gischt erfasst. Aus der aufgeschleuderten Gischt wird eine Straßenglätte berechnet. Zur Erfassung der aufgeschleuderten Gischt kann beispielsweise ein Sensor verwendet werden, der als Tropfendetektor ausgebildet ist. Weiterhin kann ein Feuchtigkeitssensor oder ein Sensor zum kontaktlosen Erfassen bzw. Zählen von aufgeschleuderten Partikeln verwendet werden. Mit dem Sensor können Wassertröpfchen, Schneeflocken, Eispartikel und/oder Schmutzpartikel erfasst werden.

Darüber hinaus ist in dem Artikel "Sensor Systems and Signal Processing for Advanced Driver Assistance" von K. Naab und R. Hoppstock, veröffentlicht auf dem Kongress "Smart Vehicles", 1995, ein Verfahren beschrieben, bei welchem das Wasser, welches auf eine Radlaufverkleidung auftrifft, mit einem Sensor erfasst wird. Ferner ist dort beschrieben, dass sich das Rauschen in dem Radkasten mit der Fahrzeuggeschwindigkeit, der Motorgeschwindigkeit und der Wasserhöhe auf der Fahrbahnoberfläche ändert. Dabei können die ersten beiden Faktoren leicht korrigiert werden, so dass nur der Anteil des Wassers, das auf die Radlaufverkleidung trifft, übrig bleibt. Das Rauschen kann mit einem Mikrofon gemessen werden. Dabei kann das Rauschen mit einem Bandpassfilter in einem Frequenzbereich zwischen 2,5 und 4,5 kHz gefiltert werden. Ferner kann das Rauschen in ein charakteristisches Gleichspannungsniveau umgerechnet werden, das mit der absoluten Wasserhöhe auf der Fahrbahnoberfläche korreliert.

Zudem ist in der EP 2 698 299 A1 ein Straßenfahrzeug beschreiben, welches eine Sensoreinrichtung zum Erfassen einer Tiefe von Wasser in einer Umgebung des Fahrzeugs aufweist. Die Sensoreinrichtung kann Lidar-Sensoren oder Ultraschallsensoren umfassen. Weiterer Stand der Technik ist aus der DE 10 2005 023696, DE 42 13 221 A1, DE 10 2004 016900 A1, US 5 521 594 A, DE 195 43 137 A1 und der DE 197 45 684 bekannt.

Es ist Aufgabe der vorliegenden Erfindung, eine Lösung aufzuzeigen, wie der Zustand einer Fahrbahn mit einer Sensoranordnung der eingangs genannten Art mit einem geringeren Rechenaufwand erkannt werden kann.

Diese Aufgabe wird erfindungsgemäß durch eine Sensoranordnung und durch ein Verfahren mit den Merkmalen gemäß der unabhängigen Patentansprüche 1 und 13 gelöst. Vorteilhafte Ausführungen der Erfindung sind Gegenstand der abhängigen Patentansprüche, der Beschreibung und der Figuren.

Der vorliegenden Erfindung liegt die Erkenntnis zugrunde, dass Mikrofone bzw. Körperschallmikrofone, mit denen das Auftreffen von Wasser auf die Radlaufverkleidung bestimmt wird, nicht für den dauerhaften Einsatz im Radkasten ausgelegt sind. Zudem sind derartige Mikrofone zu teuer für einen Serieneinsatz im Kraftfahrzeug. Anstelle von Mikrofonen wird nun eine Sensoreinrichtung verwendet, welche einen ersten Ultraschallsensor und zumindest einen zweiten Ultraschallsensor aufweist. Derartige Ultraschallsensoren werden beispielsweise im Zusammenhang mit Parkhilfe-Systemen in Kraftfahrzeugen verwendet. Der erste Ultraschallsensor und der zweite Ultraschallsensor sind bevorzugt baugleich ausgebildet. Der erste und der zweite Ultraschallsensor können dazu ausgebildet sein, ein Ultraschallsignal auszusenden. Zu diesem Zweck wird jeweils mit einem entsprechenden Wandlerelement eine Membran des Ultraschallsensors in mechanische Schwingungen versetzt. Das Ultraschallsignal kann beispielsweise eine Frequenz in einem Bereich von etwa 50 kHz aufweisen. Ferner kann mit dem jeweiligen Ultraschallsensor das von einem Objekt reflektierte Ultraschallsignal wieder empfangen werden. Mit dem ersten und dem zweiten Ultraschallsensor kann insbesondere ein Ultraschallsignal empfangen werden, welches durch das Auftreffen des Wassers auf die Radlaufverkleidung entsteht. Hierzu wird mit dem Wandlerelement die Schwingung der Membran, welche durch das reflektierte Ultraschallsignal erzeugt wird, erfasst. Ein solcher Ultraschallsensor zeichnet sich durch seine geringen Anschaffungskosten sowie durch seine Robustheit gegenüber Umwelteinflüssen aus.

Der erste und der zweite Ultraschallsensor sind bevorzugt in einem Bereich des Radkastens bzw. eines Radhauses des Kraftfahrzeugs angeordnet. Der Radkasten beschreibt den Bereich des Kraftfahrzeugs, in welchem die Räder des Kraftfahrzeugs zumindest bereichsweise angeordnet sind. In dem Radkasten ist eine Radlaufverkleidung angeordnet. Diese Radlaufverkleidung ist einer Lauffläche des Rades bzw. des Reifens zumindest bereichsweise zugewandt. Die Radlaufverkleidung, die auch als Radschale bezeichnet werden kann, kann beispielsweise aus einem Kunststoff gefertigt sein. Die Radlaufverkleidung ist insbesondere innerhalb des Radkastens bzw. des Radhauses angeordnet. Mit dem ersten Ultraschallsensor und dem zweiten Ultraschallsensor kann nun Wasser, welches auf die Radlaufverkleidung trifft, erfasst werden. Dabei können in dem Wasser auch Partikel, beispielsweise Schmutzpartikel, gelöst sein. Wenn das Kraftfahrzeug auf der Fahrbahn bewegt wird, kann Wasser, welches sich auf der Oberfläche der Fahrbahn befindet, durch die Rotation des Rades des Kraftfahrzeugs auf die Radlaufverkleidung geschleudert werden. Das Wasser, welches sich auf der Fahrbahnoberfläche befindet, trifft dann als Wassertropfen oder als Spritzwasser die Radlaufverkleidung. Somit kann mit Hilfe der Ultraschallsensoren überprüft werden, ob sich Wasser auf der Oberfläche der Fahrbahn befindet. Auf diese Weise kann der Zustand der Fahrbahn bzw. der Fahrbahnoberfläche erkannt werden. Anhand des erkannten Zustands der Fahrbahn kann dann auf den Reibungskoeffizienten zwischen den Reifen bzw. den Rädern des Kraftfahrzeugs und der Fahrbahn rückgeschlossen werden.

Bevorzugt sind der erste und der zweite Ultraschallsensor entlang einer Drehrichtung eines Rades des Kraftfahrzeugs beabstandet zueinander angeordnet. Die Drehrichtung des Rades beschreibt die Richtung der Rotation des Rades beim Abrollen auf der Oberfläche der Fahrbahn. Grundsätzlich kann das Rad in zwei unterschiedliche Richtungen gedreht werden, je nachdem ob das Kraftfahrzeug in Vorwärtsfahrtrichtung oder in Rückwärtsfahrtrichtung bewegt wird. Entlang der Drehrichtung des Rades sind die zwei Ultraschallsensoren beabstandet voneinander angeordnet. Es kann auch vorgesehen sein, dass der erste und der zweite Ultraschallsensor entlang einer Haupterstreckungsrichtung der Radlaufverkleidung beabstandet zueinander angeordnet sind. Somit kann das Auftreffen des Wassers auf die Radlaufverkleidung an unterschiedlichen Positionen der Radlaufverkleidung bestimmt werden. Somit kann beispielsweise ein Auftreffbereich des Spritzwassers bzw. des Wassers auf die Radlaufverkleidung bestimmt werden.

In einer Ausführungsform ist der erste Ultraschallsensor entlang der Drehrichtung des Rades bei einem Bewegen des Kraftfahrzeugs in Vorwärtsfahrtrichtung vor dem zweiten Ultraschallsensor angeordnet. Wenn das Kraftfahrzeug in Vorwärtsfahrtrichtung bewegt wird, wird das Rad entsprechend auf der Oberfläche der Fahrbahn abgerollt. Ein entsprechender Bezugspunkt auf einer Lauffläche des Reifens ist bei der Drehung des Rades entlang der Drehrichtung zunächst im Bereich des ersten Ultraschallsensors und anschließend in einem Bereich des zweiten Ultraschallsensors angeordnet. Der erste Ultraschallsensor kann beispielsweise ausgehend von einem Mittelpunkt des Rades entlang der Fahrzeuglängsachse hinter dem Rad angeordnet sein. Der zweite Ultraschallsensor kann im Vergleich zum ersten Ultraschallsensor eine höhere Einbauposition aufweisen. Somit kann das Spritzwasser, welches von der Fahrbahn aufgeschleudert wird an unterschiedlichen Positionen erfasst werden bzw. es kann überprüft werden, bis zu welcher Position das Spritzwasser aufgeschleudert wird.

Gemäß der Erfindung sind der erste und der zweite Ultraschallsensor derart angeordnet, dass das auf die Radlaufverkleidung auftreffende Wasser eine mechanische Schwingung einer jeweiligen Membran des ersten und des zweiten Ultraschallsensors bewirkt. Insbesondere kann der erste und der zweite Ultraschallsensor derart an oder in der Radlaufverkleidung angeordnet sein, dass mechanische Schwingungen von der Radlaufverkleidung durch Körperschall an die jeweiligen Membranen der Ultraschallsensoren übertragen werden können. Wenn Wasser bei der Fahrt des Kraftfahrzeugs von der Fahrbahnoberfläche auf die Radlaufverkleidung geschleudert wird, kann die Radlaufverkleidung in mechanische Schwingungen versetzt werden. Diese mechanischen Schwingungen können dann mit den jeweiligen Ultraschallsensoren erfasst werden. Zudem kann durch das auf die Radlaufverkleidung auftreffende Wasser ein akustisches Signal erzeugt werden, welches die jeweiligen Membranen der Ultraschallsensoren in mechanische Schwingungen versetzt. Somit kann mit Hilfe eines handelsüblichen Ultraschallsensors überprüft werden, ob sich Wasser auf der Fahrbahnoberfläche befindet.

Gemäß der Erfindung sind der erste und der zweite Ultraschallsensor dazu ausgelegt, jeweils ein Sensorsignal auszugeben und die Steuereinrichtung ist dazu ausgelegt, den Zustand der Fahrbahn anhand der jeweiligen Sensorsignale zu erkennen. Beispielsweise kann mit dem ersten Ultraschallsensor ein erstes Sensorsignal und mit dem zweiten Ultraschallsensor ein zweites Sensorsignal ausgegeben werden. Das jeweilige Sensorsignal beschreibt insbesondere die mechanische Schwingung der Membran der Ultraschallsensoren in Abhängigkeit von der Zeit. Die jeweiligen Sensorsignale können beispielsweise mit Hilfe des Wandlerelements der jeweiligen Ultraschallsensoren in Form einer elektrischen Spannung ausgegeben werden. Dabei kann es auch vorgesehen sein, dass der erste Ultraschallsensor und der zweite Ultraschallsensor ein digitales Sensorsignal ausgeben. Hierbei wird ein Signal mit dem Wert 1 ausgegeben, falls eine Amplitude der Schwingung der Membran einen Schwellenwert unterschreitet und es wird ein Signal mit dem Wert 0 ausgegeben, falls die Amplitude der Schwingung der Membran den Schwellwert überschreitet. Anhand der jeweiligen Sensorsignale kann auf einfache Weise überprüft werden, ob Wasser auf die Radlaufverkleidung trifft. Hierzu kann beispielsweise die Amplitude der jeweiligen Sensorsignale überprüft werden. Somit kann bestimmt werden, ob in dem jeweiligen Bereich der Radlaufverkleidung, der dem ersten oder dem zweiten Ultraschallsensor zugeordnet ist, Spritzwasser auftrifft oder nicht.

In einer weiteren Ausgestaltung ist die Steuereinrichtung dazu ausgelegt, ein Vorhandensein des Wassers auf einer Oberfläche der Fahrbahn anhand der Sensorsignale des ersten und/oder des zweiten Ultraschallsensors zu erkennen. Hierzu können die Amplituden der jeweiligen Sensorsignale untersucht werden. Wenn die Amplitude der jeweiligen Sensorsignale einen vorbestimmten Grenzwert überschreitet, kann davon ausgegangen werden, dass Spritzwasser auf den Bereich der Radlaufverkleidung auftrifft, der dem jeweiligen Ultraschallsensor zugeordnet ist. Wenn mit dem ersten Ultraschallsensor und/oder dem zweiten Ultraschallsensor ein Sensorsignal bereitgestellt wird, welches das Auftreffen des Wassers auf die Radlaufverkleidung beschreibt, kann davon ausgegangen werden, dass die Fahrbahn nass ist. Falls mit dem ersten und/oder dem zweiten Ultraschallsensor jeweils ein Sensorsignal bereitgestellt wird, welches im Wesentlichen keine oder nur sehr geringe Schwankungen aufweist, kann davon ausgegangen werden, und somit die Straße trocken ist.

In einer weiteren Ausführungsform ist die Steuereinrichtung dazu ausgelegt, eine Menge des Wassers, welches sich auf einer Oberfläche der Fahrbahn befindet, anhand der Sensorsignale und/oder des zweiten Ultraschallsensors zu bestimmen. Wenn beispielsweise der erste Ultraschallsensor in Drehrichtung des Rades bei einer Vorwärtsfahrt des Kraftfahrzeugs vor dem zweiten Ultraschallsensor angeordnet ist, kann davon ausgegangen werden, dass die Menge an Wasser verhältnismäßig gering ist, wenn nur mit dem ersten Ultraschallsensor das Auftreffen von Wasser detektiert wird. Wird allerdings sowohl mit dem ersten als auch mit dem zweiten Ultraschallsensor das Auftreffen von Wasser detektiert, kann davon ausgegangen werden, dass sich eine verhältnismäßig große Menge von Wasser auf der Fahrbahnoberfläche befindet. Hierbei kann zudem berücksichtigt werden, dass der Auftreffpunkt des Spritzwassers in der Radlaufverkleidung sowohl von der Geschwindigkeit des Kraftfahrzeugs bzw. Umdrehungsgeschwindigkeit des Rades als auch von der Wassermenge auf der Oberfläche der Fahrbahn abhängig ist. Zum Bestimmen der Wassermenge kann zudem die aktuelle Geschwindigkeit des Kraftfahrzeugs berücksichtigt werden, die mit einem entsprechenden Geschwindigkeitssensor erfasst werden kann. Somit kann auf einfache Weise die Menge von Wasser bestimmt werden, die sich auf der Oberfläche der Fahrbahn befindet.

Bevorzugt sind der erste und der zweite Ultraschallsensor auf einer dem Rad des Kraftfahrzeugs abgewandten Seite der Radlaufverkleidung angeordnet. Mit anderen Worten sind der erste Ultraschallsensor und der zweite Ultraschallsensor verdeckt hinter der Radlaufverkleidung angeordnet. Die Ultraschallsensoren können an einer Rückseite der Radlaufverkleidung angeordnet sein. Die jeweiligen Membranen der Ultraschallsensoren können dabei mit der Radlaufverkleidung mechanisch gekoppelt sein. Zudem können die Ultraschallsensoren mit jeweiligen Halteelementen an der Rückseite der Radlaufverkleidung befestigt sein. Wenn die Ultraschallsensoren verdeckt hinter der Radlaufverkleidung angeordnet sind, können diese besonders vor Umwelteinflüssen geschützt werden und somit zuverlässig betrieben werden.

In einer weiteren Ausgestaltung weist die Sensoreinrichtung zumindest einen dritten Ultraschallsensor auf, welcher an oder in der Radlaufverkleidung angeordnet ist. Der dritte Ultraschallsensor kann ebenfalls beabstandet zu dem ersten und dem zweiten Ultraschallsensor angeordnet sein. Beispielsweise kann der zumindest eine dritte Ultraschallsensor in Drehrichtung des Reifens bei einer Vorwärtsfahrt des Kraftfahrzeugs hinter dem zweiten Ultraschallsensor angeordnet sein. Somit kann der Auftreffpunkt des Wassers auf die Radlaufverkleidung genauer bestimmt werden.

Ein erfindungsgemäßes Fahrerassistenzsystem für ein Kraftfahrzeug umfasst eine erfindungsgemäße Sensoranordnung. Dabei kann die Sensoranordnung auch mehrere Sensoreinrichtungen umfassen, die mit der Steuereinrichtung zur Datenübertragung verbunden sind. Beispielsweise kann jedem Rad bzw. jedem Radkasten des Kraftfahrzeugs eine Sensoreinrichtung zugeordnet sein. Es kann auch vorgesehen sein, dass an oder in einem Radkasten mehrere Sensoren angeordnet sind.

Bevorzugt ist das Fahrerassistenzsystem dazu ausgelegt, in Abhängigkeit von dem mit der Sensoranordnung erfassten Zustand der Fahrbahn einen Warnhinweis an einen Fahrer des Kraftfahrzeugs auszugeben. Wenn mittels der Sensoranordnung erkannt wird, dass die Fahrbahn nass ist, kann an den Fahrer des Kraftfahrzeugs ein entsprechender Warnhinweis ausgegeben werden. Dieser Warnhinweis kann dem Fahrer des Kraftfahrzeugs optisch, akustisch und/oder haptisch ausgegeben werden. Insbesondere kann an den Fahrer ein Warnhinweis ausgegeben werden, wenn mittels der Sensoranordnung erkannt wird, dass Aquaplaning droht. Der Warnhinweis kann die Information enthalten, dass der Fahrer die Geschwindigkeit reduzieren soll.

In einer weiteren Ausgestaltung ist das Fahrerassistenzsystem dazu ausgelegt, eine Geschwindigkeit des Kraftfahrzeugs in Abhängigkeit von dem mit der Sensoranordnung erfassten Zustand der Fahrbahn anzupassen. Wenn beispielsweise mit der Sensoranordnung erkannt wird, dass die Wassermenge, die sich auf der Fahrbahnoberfläche befindet, einen vorbestimmten Grenzwert überschreitet, kann die Geschwindigkeit des Kraftfahrzeugs mit Hilfe des Fahrerassistenzsystems reduziert werden. Hierzu kann das Fahrerassistenzsystem einen Eingriff in die Bremsanlage des Kraftfahrzeugs durchführen. Durch die Reduzierung der Geschwindigkeit des Kraftfahrzeugs kann die Gefahr von Aquaplaning reduziert werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf die erfindungsgemäße Sensoranordnung vorgestellten bevorzugten Ausführungsformen und deren Vorteile gelten entsprechend für das erfindungsgemäße Fahrerassistenzsystem, das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Sensoranordnung aufweist;
- Fig. 2: das Kraftfahrzeug gemäß Fig. 1, bei welchem drei Ultraschallsensoren der Sensoranordnung hinter einer Radlaufverkleidung angeordnet sind;
- Fig. 3: einen zeitlichen Verlauf der Sensorsignale der drei Ultraschallsensoren gemäß Fig. 2 bei einer verhältnismäßig geringen Menge an Wasser auf einer Oberfläche einer Fahrbahn; und
- Fig. 4: einen zeitlichen Verlauf der Sensorsignale der drei Ultraschallsensoren gemäß Fig. 2 bei einer verhältnismäßig hohen Menge an Wasser auf einer Oberfläche einer Fahrbahn

In den Figuren werden gleiche und funktionsgleiche Elemente mit den gleichen Bezugszeichen versehen.

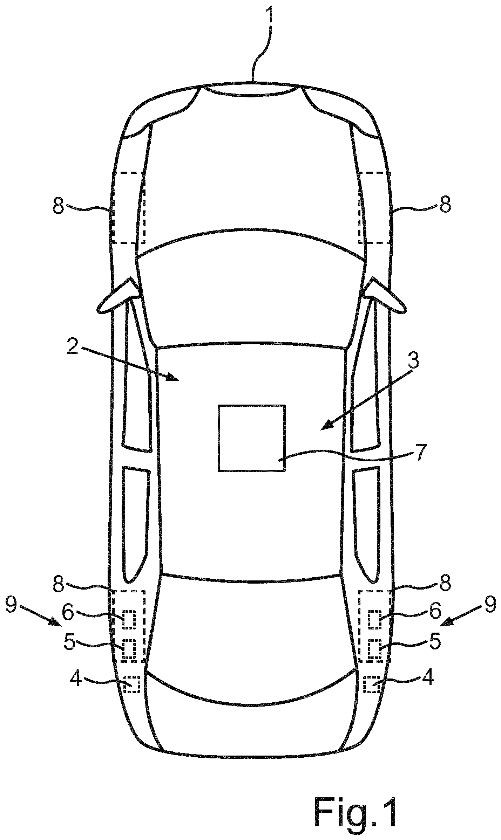

Fig. 1 zeigt ein Kraftfahrzeug 1 gemäß einer Ausführungsform der vorliegenden Erfindung in einer Draufsicht. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 dient zur Unterstützung des Fahrers beim Führen des Kraftfahrzeugs 1. Das Fahrerassistenzsystem 1 kann beispielsweise ein Parkhilfe-System, einen Totwinkel-Assistent und/oder einen Abstandsregeltempomat umfassen.

Das Fahrerassistenzsystem 2 umfasst ferner eine Sensoranordnung 3. Vorliegend umfasst die Sensoranordnung 3 zwei Sensoreinrichtungen 9. Jede der Sensoreinrichtungen 9 ist jeweils einem hinteren Rad 8 des Kraftfahrzeugs 1 zugeordnet. Jede der Sensoreinrichtungen 9 umfasst zumindest zwei Ultraschallsensoren 4. 5, 6. In dem vorliegenden Ausführungsbeispiel umfasst jede der Sensoreinrichtungen 9 einen ersten Ultraschallsensor 4, einen zweiten Ultraschallsensor 5 und einen dritten Ultraschallsensor 6. Die Ultraschallsensoren 4, 5, 6 sind zur Datenübertragung mit einer Steuereinrichtung 7 verbunden. Entsprechende Datenleitungen sind vorliegend der Übersichtlichkeit halber nicht dargestellt. Die Steuereinrichtung 7 ist ferner dazu ausgelegt ein entsprechendes Steuersignal bereitzustellen, mit dem das Kraftfahrzeug 1 zumindest semi-autonom manövriert werden kann. Hierzu kann ein entsprechender Eingriff in eine Lenkung des Kraftfahrzeugs 1, in eine Bremsanlage und/oder einen Antriebsmotor durchgeführt werden. Ferner kann in Folge eines Steuersignals, das von der Steuereinrichtung bereitgestellt wird, ein entsprechender Warnhinweis an den Fahrer des Kraftfahrzeugs 1 ausgegeben werden.

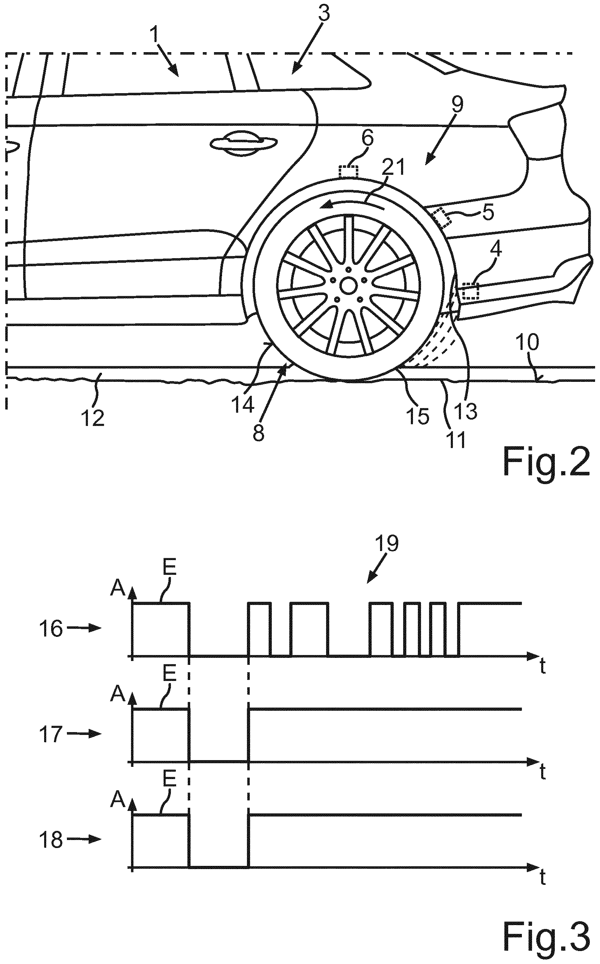

Fig. 2 zeigt den Heckbereich des Kraftfahrzeugs 1 gemäß Fig. 1 in einer Seitenansicht. Hierbei ist zu erkennen, dass die drei Ultraschallsensoren 4, 5, 6 hinter einer Radlaufverkleidung 13 des Kraftfahrzeugs 1 angeordnet sind. Die drei Ultraschallsensoren 4, 5, 6 sind also auf einer dem Rad 8 abgewandten Seite der Radlaufverkleidung 13 angeordnet. Die Radlaufverkleidung 13 ist innerhalb des Radkastens angeordnet und kann beispielsweise aus einem Kunststoff gefertigt sein.

Der erste Ultraschallsensor 4, der zweite Ultraschallsensor 5 und der dritte Ultraschallsensor 6 sind bevorzugt baugleich ausgebildet. Die Ultraschallsensoren 4, 5, 6 umfassen jeweils eine Membran, die beispielsweise topfförmig ausgebildet sein kann. Die Membran kann aus Aluminium gefertigt sein und kann eine Resonanzfrequenz von etwa 50 kHz aufweisen. Innerhalb der Membran ist ein Wandlerelement angeordnet, das beispielsweise durch ein piezoelektrisches Element gebildet sein kann. Das Wandlerelement ist mechanisch mit der Membran gekoppelt. Somit können Schwingungen der Membran mit Hilfe des Wandlerelements erfasst werden und als Sensorsignal, insbesondere in Form einer elektrischen Spannung, ausgegeben werden. Die Ultraschallsensoren 4, 5, 6 können jeweils mit einem entsprechenden Halteelement an der Rückseite der Radlaufverkleidung 13 gehalten sein. Insbesondere sind die Ultraschallsensoren 4, 5, 6 derart angeordnet, dass die jeweiligen Membranen der Ultraschallsensoren 4, 5, 6 mechanisch mit der Radlaufverkleidung 13 gekoppelt sind.

Das Kraftfahrzeug 1 wird auf einer Fahrbahn 11 bzw. auf einer Oberfläche 10 der Fahrbahn 11 bewegt. Vorliegend wird das Kraftfahrzeug 1 in Vorwärtsfahrtrichtung bewegt. Hierbei wird das Rad 8 des Kraftfahrzeugs 1 auf der Fahrbahn 11 abgerollt. Dies bewirkt, dass das Rad 9 entlang einer Drehrichtung 21 gedreht wird. Vorliegend befindet sich auf der Oberfläche 10 der Fahrbahn 11 Wasser 12. Das Wasser 12, das sich auf der Oberfläche 10 der Fahrbahn 9 befindet, wird durch die Rotation des Rades 8 aufgeschleudert und trifft auf die Radlaufverkleidung 13. In Folge des Auftreffens des Wassers 11 bzw. der Wassertropfen bzw. des Spritzwassers auf die Radlaufverkleidung 13 entsteht ein Schallsignal innerhalb des Radkastens. Zudem wird die Radlaufverkleidung 13 zu mechanischen Schwingungen angeregt. Die mechanischen Schwingungen der Radlaufverkleidung können mit Hilfe der Ultraschallsensoren 4, 5, 6 erfasst werden. Hierzu wird die mechanische Schwingung der Membran der jeweiligen Ultraschallsensoren 4, 5, 6 mit Hilfe des Wandlerelements erfasst. Mit den jeweiligen Ultraschallsensoren 4, 5, 6 kann dann ein Sensorsignal E ausgegeben werden.

Fig. 3 zeigt die Sensorsignale E der Ultraschallsensoren 4, 5, 6 in Abhängigkeit von der Zeit. Vorliegend wir mit den Ultraschallsensoren 4, 5, 6 jeweils ein digitales Sensorsignal E ausgegeben. Das digitale Sensorsignal E weist den Wert 0 auf, wenn die Schwingung der Membran einen vorbestimmten Schwellwert überschreitet. Ansonsten weist das Sensorsignal E den Wert 1 auf. Dabei beschreibt das Diagramm 16 eine Amplitude A des Sensorsignals des ersten Ultraschallsensors 4 in Abhängigkeit von der Zeit t. Das Diagramm 17 beschreibt die Amplitude A des Sensorsignals E des zweiten Ultraschallsensors 5 in Abhängigkeit von der Zeit t. Das Diagramm 18 beschreibt die Amplitude A des Sensorsignals E des dritten Ultraschallsensors 6 in Abhängigkeit von der Zeit t. Vorliegend ist der Fall dargestellt, bei dem sich auf der Oberfläche 10 der Fahrbahn 11 eine verhältnismäßig geringe Menge von Wasser 12 befindet. In diesem Fall wird das sich auf der Fahrbahn 11 befindliche Wasser 12 bis zu dem ersten Ultraschallsensor 4 aufgeschleudert. Dies ist vorliegend in dem Bereich 19 des Diagramms 16 zu erkennen, in dem mit dem ersten Ultraschallsensor 4 ein entsprechendes Sensorsignal E bereitgestellt wird, das Schwankungen aufweist. Diese Schwankungen beschreiben das Auftreffen des Wassers 12 auf die Radlaufverkleidung 13, in Folge dessen die Membran des ersten Ultraschallsensors 4 zu mechanischen Schwingungen angeregt wird.

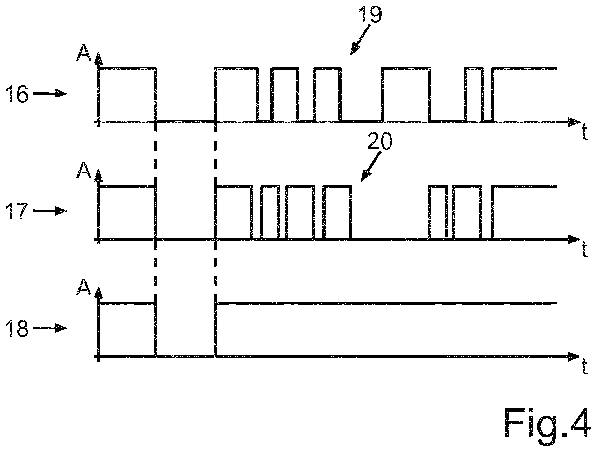

Fig. 4 zeigt das Diagramm gemäß Fig. 3 für den Fall, dass sich eine größere Menge von Wasser 12 auf der Fahrbahn 11 befindet. Hierbei wird das Wasser 12 in den Bereich des Radlaufs 13 aufgeschleudert, der dem ersten Ultraschallsensor 4 und dem zweiten Ultraschallsensor 5 zugeordnet ist. Somit können sowohl mit dem ersten Ultraschallsensor 4 als auch mit dem zweiten Ultraschallsensor 5 entsprechende Sensorsignale E empfangen werden, welche das Auftreffen des Wassers 11 auf die Radlaufverkleidung 13 beschreiben. Dies ist vorliegend in dem Bereich 19 des Diagramms 16 sowie in dem Bereich 20 des Diagramms 17 zu erkennen.

Falls die Menge an Wasser 12, die sich auf der Oberfläche 10 der Fahrbahn 11 befindet, einen vorbestimmten Grenzwert überschreitet, kann beispielsweise mithilfe des Fahrerassistenzsystems 2 ein Warnhinweis an den Fahrer ausgegeben werden. Zu diesem Zweck kann beispielsweise ein entsprechendes Symbol auf einer Anzeigeeinrichtung des Kraftfahrzeugs 1 dargestellt werden. Ebenso kann das Fahrerassistenzsystem 2 einen Bremseingriff durchführen. Somit kann erreicht werden, dass die Geschwindigkeit des Kraftfahrzeugs 1 reduziert wird. Somit kann die Gefahr von Aquaplaning reduziert wird.

## Patentansprüche

1. Sensoranordnung (3) zum Erkennen eines Zustands einer Fahrbahn (11),
mit einer Radlaufverkleidung (13) eines Kraftfahrzeugs (1), und
mit einer Sensoreinrichtung (9), welche dazu ausgelegt ist, während einer Fahrt des Kraftfahrzeugs (1) auf der Fahrbahn (11) ein Auftreffen von Wasser (12) auf die Radlaufverkleidung (13) des Kraftfahrzeugs (1) zu erfassen, und mit einer Steuereinrichtung (7) zum Erkennen des Zustands der Fahrbahn (11) anhand des mittels der Sensoreinrichtung (9) erfassten Auftreffen des Wassers (12), wobei die Sensoreinrichtung (9) einen ersten und einen zweiten Ultraschallsensor (4, 5) aufweist, welche jeweils dazu ausgelegt sind, ein Ultraschallsignal zu empfangen und welche jeweils zudem dazu ausgelegt sind, das Auftreffen des Wassers (12) auf die Radlaufverkleidung (13) zu erfassen,
wobei der erste und der zweite Ultraschallsensor dazu ausgelegt sind, jeweils ein Sensorsignal (E) auszugeben, welches das Auftreffen des Wassers auf die Radlaufverkleidung beschreibt und wobei die Steuereinrichtung dazu ausgelegt ist, den Zustand der Fahrbahn anhand der jeweiligen Sensorsignale zu erkennen, wobei der erste und der zweite Ultraschallsensor (4, 5) beabstandet zueinander an oder in der Radlaufverkleidung (13) angeordnet sind, **dadurch gekennzeichnet, dass** der erste und der zweite Ultraschallsensor (4, 5) derart angeordnet sind, dass, wenn Wasser bei der Fahrt des Kraftfahrzeugs von der Fahrbahnoberfläche auf die Radverkleidung geschleudert wird und so die Radverkleidung in mechanische Schwingungen versetzt wird, das auf die Radlaufverkleidung (13) auftreffende Wasser (12) eine mechanische Schwingung einer jeweiligen Membran des ersten und des zweiten Ultraschallsensors (4, 5) bewirkt und dass die mechanischen Schwingungen von der Radlaufverkleidung durch Körperschall an die jeweiligen Membranen der Ultraschallsensoren (4, 5) übertragen werden,
und die mechanischen Schwingungen mit dem ersten und zweiten Ultraschallsensor erfasst und als Sensorsignal (E) ausgegeben werden.

2. Sensoranordnung (3) nach Anspruch 1,
**dadurch gekennzeichnet, dass**
der erste und der zweite Ultraschallsensor (4, 5) entlang einer Drehrichtung (21) eines Rades (8) des Kraftfahrzeugs (1) beabstandet zueinander angeordnet sind.

3. Sensoranordnung (3) nach Anspruch 1 oder 2,
**dadurch gekennzeichnet, dass**
der erster Ultraschallsensor (4) entlang der Drehrichtung (21) des Rades (8) bei einem Bewegen des Kraftfahrzeugs (1) in Vorwärtsfahrtrichtung vordem zweiten Ultraschallsensor (5) angeordnet ist.

4. Sensoranordnung (3) nach einem der vorhergehenden Ansprüche,
**dadurch gekennzeichnet**, dassder zweite Ultraschallsensor (5) im Vergleich zum ersten Ultraschallsensor (4) eine höhere Einbauposition aufweist, so dass das Spritzwasser, welches von der Fahrbahn aufgeschleudert wird, an unterschiedlichen Positionen erfasst werden kann bzw. überprüft werden kann, bis zu welcher Position das Spritzwasser aufgeschleudert wird.

5. Sensoranordnung (3) nach Anspruch 1, **dadurch gekennzeichnet, dass**
die Steuereinrichtung (7) dazu ausgelegt ist, ein Vorhandensein des Wassers (12) auf einer Oberfläche (10) der Fahrbahn (11) anhand der Sensorsignale des ersten und/oder des zweiten Ultraschallsensors (4, 5) zu erkennen.

6. Sensoranordnung (3) nach Anspruch 1 oder 5, **dadurch gekennzeichnet, dass**
die Steuereinrichtung (7) dazu ausgelegt ist, eine Menge des Wassers (12), welches sich auf der Oberfläche (10) der Fahrbahn (11) befindet, anhand der Sensorsignale des ersten und/oder des zweiten Ultraschallsensors (4, 5) zu bestimmen.

7. Sensoranordnung (3) nach einem der vorhergehenden Ansprüche,
**dadurch gekennzeichnet, dass**
der erste und der zweite Ultraschallsensor (4, 5) auf einer dem Rad (8) des Kraftfahrzeugs (1) abgewandten Seite der Radlaufverkleidung (13) angeordnet sind.

8. Sensoranordnung (3) nach einem der vorhergehenden Ansprüche,
**dadurch gekennzeichnet, dass**
die Sensoreinrichtung (9) zumindest einen dritten Ultraschallsensor (6) aufweist, welche an oder in der Radlaufverkleidung (13) angeordnet ist.

9. Fahrerassistenzsystem (2) für ein Kraftfahrzeug (1) mit einer Sensoranordnung nach einem der vorhergehenden Ansprüche.

10. Fahrerassistenzsystem (2) nach Anspruch 9, **dadurch gekennzeichnet, dass**
das Fahrerassistenzsystem (2) dazu ausgelegt ist, in Abhängigkeit von dem mit der Sensoranordnung (3) erfassten Zustand der Fahrbahn (11) ein Warnsignal an einen Fahrer des Kraftfahrzeugs (1) auszugeben.

11. Fahrerassistenzsystem (2) nach Anspruch 9 oder 10, **dadurch gekennzeichnet, dass**
das Fahrerassistenzsystem (2) dazu ausgelegt ist, eine Geschwindigkeit des Kraftfahrzeugs (1) in Abhängigkeit von dem mit der Sensoranordnung (3) erfassten Zustand der Fahrbahn (11) anzupassen.

12. Kraftfahrzeug (1) mit einem Fahrerassistenzsystem (2) nach einem der Ansprüche 9 bis 11,

13. Verfahren zum Erkennen eines Zustands einer Fahrbahn, bei welchem mittels einer Sensoreinrichtung während einer Fahrt eines Kraftfahrzeugs auf der Fahrbahn ein Auftreffen von Wasser auf eine Radlaufverkleidung des Kraftfahrzeugs erfasst wird und mittels einer Steuereinrichtung der Zustand der Fahrbahn anhand des mittels der Sensoreinrichtung erfassten Auftreffen des Wassers erkannt wird,
wobei die Sensoreinrichtung (9) einen ersten und einen zweiten Ultraschallsensor (4, 5) aufweist, welche jeweils dazu ausgelegt sind, ein Ultraschallsignal zu empfangen und welche jeweils zudem dazu ausgelegt sind, das Auftreffen des Wassers auf die Radlaufverkleidung zu erfassen,
wobei der erste und der zweite Ultraschallsensor dazu ausgelegt sind, jeweils ein Sensorsignal (E) auszugeben, welches das Auftreffen des Wassers auf die Radlaufverkleidung beschreibt, und wobei die Steuereinrichtung dazu ausgelegt ist, den Zustand der Fahrbahn anhand der jeweiligen Sensorsignale zu erkennen,
wobei der erste und der zweite Ultraschallsensor beabstandet zueinander an oder in der Radlaufverkleidung angeordnet sind,
**dadurch gekennzeichnet, dass**
dass der erste und der zweite Ultraschallsensor derart angeordnet sind, dass,
wenn Wasser bei der Fahrt des Kraftfahrzeugs von der Fahrbahnoberfläche auf die Radverkleidung geschleudert wird und so die Radverkleidung in mechanische Schwingungen versetzt wird, das auf die Radlaufverkleidung auftreffende Wasser eine mechanische Schwingung einer jeweiligen Membran des ersten und des zweiten Ultraschallsensors bewirkt und die mechanischen Schwingungen von der Radlaufverkleidung durch Körperschall an die jeweiligen Membranen der Ultraschallsensoren übertragen werden
und die mechanischen Schwingungen mit dem ersten und zweiten Ultraschallsensor erfasst und als Sensorsignal (E) ausgegeben werden.

## Claims

1. Sensor arrangement (3) for detecting a state of a road (11), with a wheel arch lining (13) of a motor vehicle (1) and with a sensor device (9) which is designed to detect an impact of water (12) on the wheel arch lining (13) of the motor vehicle (1) while the motor vehicle (1) is travelling on the road (11), and with a control device (7) for detecting the state of the road (11) on the basis of the impact of the water (12) detected by means of the sensor device (9),
wherein the sensor device (9) has a first and a second ultrasound sensor (4, 5) which are designed in each case to receive an ultrasound signal and which are furthermore designed in each case to detect the impact of the water (12) on the wheel arch lining (13),
wherein the first and second ultrasound sensor are designed in each case to output a sensor signal (E), which describes the impact of the water on the wheel arch lining and wherein the control device is designed to detect the state of the road on the basis of the respective sensor signals,
wherein the first and the second ultrasound sensor (4, 5) are arranged apart from one another on or in the wheel arch lining (13),
**characterized in that** the first and the second ultrasound sensor (4, 5) are arranged in such a way that, if water is thrown up from the road surface onto the wheel arch lining when the motor vehicle is travelling and thus mechanical vibrations are induced in the wheel arch lining, the water (12) impacting on the wheel arch lining (13) induces a mechanical vibration in a respective membrane of the first and of the second ultrasound sensor (4, 5) and that the mechanical vibrations are transmitted from the wheel arch lining through solid-borne sound to the respective membranes of the ultrasound sensors (4, 5),
and the mechanical vibrations are detected with the first and second ultrasound sensor and output as a sensor signal (E).

2. Sensor arrangement (3) according to Claim 1,
**characterized in that**
the first and the second ultrasound sensor (4, 5) are arranged apart from one another along a direction of rotation (21) of a wheel (8) of the motor vehicle (1).

3. Sensor arrangement (3) according to Claim 1 or 2,
**characterized in that**
the first ultrasound sensor (4) is arranged in front of the second ultrasound sensor (5) along the direction of rotation (21) of the wheel (8) when the motor vehicle (1) is moved in a forward direction.

4. Sensor arrangement (3) according to one of the preceding claims,
**characterized in that**
the second ultrasound sensor (5) has a higher installation position than the first ultrasound sensor (4), so that the spray water which is thrown up from the road can be detected at different positions or a check can be carried out to determine the position up to which the spray water is thrown up.

5. Sensor arrangement (3) according to Claim 1,
**characterized in that**
the control device (7) is designed to detect a presence of water (12) on a surface (10) of the road (11) on the basis of the sensor signals of the first and/or the second ultrasound sensor (4, 5).

6. Sensor arrangement (3) according to Claim 1 or 5,
**characterized in that**
the control device (7) is designed to determine an amount of the water (12) which is present on the surface (10) the road (11) on the basis of the sensor signals of first and/or the second ultrasound sensor (4, 5).

7. Sensor arrangement (3) according to one of the preceding claims,
**characterized in that**
the first and the second ultrasound sensor (4, 5) are arranged on a side of the wheel arch lining (13) facing away from the wheel (8) of the motor vehicle (1).

8. Sensor arrangement (3) according to one of the preceding claims,
**characterized in that**
the sensor device (9) has at least one third ultrasound sensor (6) which is arranged on or in the wheel arch lining (13).

9. Driver assistance system (2) for a motor vehicle (1) with a sensor arrangement according to one of the preceding claims.

10. Driver assistance system (2) according to Claim 9,
**characterized in that**
the driver assistance system (2) is designed to output a warning signal to a driver of the motor vehicle (1) depending on the state of the road (11) detected with the sensor arrangement (3).

11. Driver assistance system (2) according to Claim 9 or 10,
**characterized in that**
the driver assistance system (2) is designed to adjust the speed of the motor vehicle (1) depending on the state of the road (11) detected with the sensor arrangement (3) .

12. Motor vehicle (1) with a driver assistance system (2) according to one of Claims 9 to 11.

13. Method for detecting a state of the road, in which an impact of water on a wheel arch lining of the motor vehicle is detected by means of a sensor device while a motor vehicle is travelling on the road and the state of the road is detected by means of a control device on the basis of the impact of the water detected by means of the sensor device, wherein the sensor device (9) has a first and a second ultrasound sensor (4, 5) which are designed in each case to receive an ultrasound signal and
which are furthermore designed in each case to detect the impact of the water on the wheel arch lining,
wherein the first and second ultrasound sensor are designed in each case to output a sensor signal (E), which describes the impct of the water on the wheel arch lining, and wherein the control device is designed to detect the state of the road on the basis of the respective sensor signals,
wherein the first and the second ultrasound sensor are arranged apart from one another on or in the wheel arch lining,
**characterized in that**
the first and second ultrasound sensor are arranged in such a way that, if water is thrown up from the road surface onto the wheel arch lining when the motor vehicle is travelling and thus mechanical vibrations are induced in the wheel arch lining, the water impacting on the wheel arch lining induce a mechanical vibration in a respective membrane of the first and of the second ultrasound sensor and the mechanical vibrations are transmitted from the wheel arch lining through solid-borne sound to the respective membranes of the ultrasound sensors
and the mechanical vibrations are detected with the first and second ultrasound sensor and output at a sensor signal (E) .

## Revendications

1. Arrangement détecteur (3) destiné à reconnaître un état d'une chaussée (11), comprenant un habillage de passage de roue (13) d'un véhicule automobile (1), et comprenant un dispositif de détection (9), lequel est conçu pour détecter, pendant un déplacement du véhicule automobile (1) sur la chaussée (11), un impact de l'eau (12) sur l'habillage de passage de roue (13) du véhicule automobile (1), et comprenant un dispositif de commande (7) destiné à reconnaître l'état de la chaussée (11) à l'aide de l'impact de l'eau (12) détecté au moyen du dispositif de détection (9),
le dispositif de détection (9) possédant un premier et un deuxième détecteur à ultrasons (4, 5) qui sont respectivement conçus pour recevoir un signal ultrasonore et qui sont en outre respectivement conçus pour détecter l'impact de l'eau (12) sur l'habillage de passage de roue (13),
le premier et le deuxième détecteur à ultrasons étant conçus pour délivrer respectivement un signal de détecteur (E) qui décrit l'impact de l'eau sur l'habillage de passage de roue et le dispositif de commande étant conçu pour reconnaître l'état de la chaussée à l'aide des signaux de détecteur respectifs,
le premier et le deuxième détecteur à ultrasons (4, 5) étant disposés de manière espacée l'un de l'autre sur ou dans l'habillage de passage de roue (13), **caractérisé en ce que** le premier et le deuxième détecteur à ultrasons (4, 5) sont disposés de telle sorte que lorsque de l'eau est propulsée depuis la surface de la chaussée sur l'habillage de roue lors du déplacement du véhicule automobile et que l'habillage de roue est ainsi amené en oscillations mécaniques, l'eau (12) projetée sur l'habillage de passage de roue (13) produit une oscillation mécanique d'une membrane respective du premier et du deuxième détecteur à ultrasons (4, 5) et que les oscillations mécaniques sont transmises de l'habillage de passage de roue aux membranes respectives des détecteurs à ultrasons (4, 5) par bruit de structure, et les oscillations mécaniques sont détectées avec le premier et le deuxième détecteur à ultrasons et délivrées sous la forme de signal de détecteur (E).

2. Arrangement détecteur (3) selon la revendication 1, **caractérisé en ce que** le premier et le deuxième détecteur à ultrasons (4, 5) sont disposés de manière espacée l'un de l'autre le long d'un sens de rotation (21) d'une roue (8) du véhicule automobile (1).

3. Arrangement détecteur (3) selon la revendication 1 ou 2, **caractérisé en ce que** le premier détecteur à ultrasons (4) est disposé devant le deuxième détecteur à ultrasons (5) le long du sens de rotation (21) de la roue (8) lors d'un déplacement du véhicule automobile (1) en marche avant.

4. Arrangement détecteur (3) selon l'une des revendications précédentes, **caractérisé en ce que** le deuxième détecteur à ultrasons (5) possède une position d'installation plus haute en comparaison du premier détecteur à ultrasons (4), de sorte que l'eau pulvérisée qui est projetée depuis la chaussée peut être détectée en différentes positions ou qu'il soit possible de vérifier jusqu'à quelle position l'eau pulvérisée est projetée.

5. Arrangement détecteur (3) selon la revendication 1, **caractérisé en ce que** le dispositif de commande (7) est conçu pour reconnaître une présence de l'eau (12) sur une surface (10) de la chaussée (11) à l'aide des signaux de détecteur du premier et/ou du deuxième détecteur à ultrasons (4, 5).

6. Arrangement détecteur (3) selon la revendication 1 ou 5, **caractérisé en ce que** le dispositif de commande (7) est conçu pour déterminer une quantité d'eau (12) qui se trouve sur une surface (10) de la chaussée (11) à l'aide des signaux de détecteur du premier et/ou du deuxième détecteur à ultrasons (4, 5).

7. Arrangement détecteur (3) selon l'une des revendications précédentes, **caractérisé en ce que** le premier et le deuxième détecteur à ultrasons (4, 5) sont disposés sur un côté de l'habillage de passage de roue (13) à l'opposé de la roue (8) du véhicule automobile (1) .

8. Arrangement détecteur (3) selon l'une des revendications précédentes, **caractérisé en ce que** le dispositif de détection (9) possède au moins un troisième détecteur à ultrasons (6) qui est disposé sur ou dans l'habillage de passage de roue (13).

9. Système d'assistance au conducteur (2) pour un véhicule automobile (1) comprenant un arrangement détecteur selon l'une des revendications précédentes.

10. Système d'assistance au conducteur (2) selon la revendication 9, **caractérisé en ce que** le système d'assistance au conducteur (2) est conçu pour délivrer un signal d'alerte à un conducteur du véhicule automobile (1) en fonction de l'état de la chaussée (11) détecté avec l'arrangement détecteur (3).

11. Système d'assistance au conducteur (2) selon la revendication 9 ou 10, **caractérisé en ce que** le système d'assistance au conducteur (2) est conçu pour adapter une vitesse du véhicule automobile (1) en fonction de l'état de la chaussée (11) détecté avec l'arrangement détecteur (3) .

12. Véhicule automobile (1) équipé d'un système d'assistance au conducteur (2) selon l'une des revendications 9 à 11.

13. Procédé pour reconnaître un état d'une chaussée, avec lequel un impact de l'eau sur un habillage de passage de roue du véhicule automobile est détecté au moyen d'un dispositif de détection pendant un déplacement d'un véhicule automobile sur la chaussée, et l'état de la chaussée est reconnu au moyen d'un dispositif de commande à l'aide de l'impact de l'eau détecté au moyen du dispositif de détection,
le dispositif de détection (9) possédant un premier et un deuxième détecteur à ultrasons (4, 5) qui sont respectivement conçus pour recevoir un signal ultrasonore et qui sont en outre respectivement conçus pour détecter l'impact de l'eau sur l'habillage de passage de roue,
le premier et le deuxième détecteur à ultrasons étant conçus pour délivrer respectivement un signal de détecteur (E) qui décrit l'impact de l'eau sur l'habillage de passage de roue, et le dispositif de commande étant conçu pour reconnaître l'état de la chaussée à l'aide des signaux de détecteur respectifs,
le premier et le deuxième détecteur à ultrasons étant disposés de manière espacée l'un de l'autre sur ou dans l'habillage de passage de roue,
**caractérisé en ce que** le premier et le deuxième détecteur à ultrasons sont disposés de telle sorte que lorsque de l'eau est propulsée depuis la surface de la chaussée sur l'habillage de roue lors du déplacement du véhicule automobile et que l'habillage de roue est ainsi amené en oscillations mécaniques, l'eau projetée sur l'habillage de passage de roue produit une oscillation mécanique d'une membrane respective du premier et du deuxième détecteur à ultrasons et les oscillations mécaniques sont transmises de l'habillage de passage de roue aux membranes respectives des détecteurs à ultrasons par bruit de structure,
et les oscillations mécaniques sont détectées avec le premier et le deuxième détecteur à ultrasons et délivrées sous la forme de signal de détecteur (E).
